# EUROPEAN PATENT APPLICATION

(11) **EP 1 308 256 A1**
(43) Date of publication of application: **07.05.2003**
(21) Application number: 01309253.1
(22) Date of filing: 31.10.2001
(51) Int. Cl.: B29C 41/04

(54) **Rotomoulding**

(71) Applicant: Borealis Technology Oy, 06101 Porvoo (FI)
(72) Inventor: Eggen, Svein Staal Borealis Technology OY, 06101 Porvoo (FI)
(74) Representative: Jackson, Robert Patrick

(57) **Abstract**

The invention concerns a rotomoulding method and apparatus in which the shear viscosity of the melted polymer is reduced by applying low frequency vibrations to the polymer during the moulding process.

A chamber 2 contains a mould 3 which is connected via a rotary drive mechanism 4 to a motor 5, allowing simultaneous rotation around two axes. Means for applying low frequency vibrations is provided in one or more of four alternative positions. Either on the outside wall of the chamber P1, on the mould P2, attached to the drive shaft P3 or connected to the end of conduit 6, which leads from the mould to the outside of the chamber P4.

## Description

The present invention relates to a method and apparatus for use in rotomoulding.

Rotomoulding, also referred to as rotational moulding or rotational casting, is a processing method that dates back to the early 1900s. It is today commonly used for moulding articles, particularly large articles, from polymers.

It has the advantage of being one of the most straightforward moulding techniques commonly used. Powdered polymer is placed inside the mould whose inside surface is shaped to provide the outside surface of the finished product. The mould is provided within a heated chamber so that the heated mould melts the polymer in contact with it. At the same time the mould is rotated, generally about at least two axes, in order to distribute the powder around the inside of the mould.

The thickness of the product wall therefore depends upon the amount of polymer placed inside the mould. The evenness of the wall thickness relies upon the polymer being evenly distributed about the mould.

It will be appreciated that the only significant forces acting on the polymer are gravity and the reaction of the mould walls against the polymer. The acceleration forces created by rotating the mould are negligible because of the slow speeds involved. The process therefore critically depends upon the ability of the powder to flow readily within the mould as the mould is rotated. Once powder particles stick to the mold wall the powder particles must flow together to form a uniform, homogenous polymer layer. This, of course, means that the viscosity of the polymer has a very significant effect on the process. If the viscosity is too high then the process will either take too long to be viable, or will not be possible at all.

A source of heat is an essential requirement of any rotomoulding process and so viscosity can be controlled to some extent by varying the temperature of the mould. However, if a high temperature is used then this greatly slows down the process because of the need to allow the product to cool before it can be removed from the mould. Furthermore, most polymers are sensitive to excessive heating such that their mechanical properties will be damaged. There are therefore significant practical limitations on the degree of control of viscosity achievable by varying the mould temperature.

There are also other drawbacks with the standard rotomoulding process. Since the polymer is placed into the mould in powder form, there is inevitably a significant amount of air trapped within the polymer as it melts. If this is not removed, the result will be bubbles of varying sizes within the finished product. This may also tend generally to weaken the polymer structure.

In order to address this problem Japanese patent application 52-71558 proposes that the polymer be subjected to ultrasonic vibrations of around 20,000 Hz. It is claimed that doing this results in the air bubbles and impurities being rapidly removed and that the internal bonding of the polymer is improved. The result is said to be a significantly stronger product.

This does not, however, address the problem set out above that there is a limit on the maximum viscosity of polymer that may successfully be rotomoulded. In practice this means that polymers having high shear viscosities cannot be used in rotomoulding processes without compromising the mechanical properties of the product, and/or increasing the time taken to produce the rotomoulded product. Since shear viscosity depends upon the molecular weight of the polymer, this means that rotomoulding of high molecular weight polymers is problematic. This in turn means that there is a need to improve the rotomoulding technique to facilitate its use in applications where the high strengths that are obtained by using such polymers are necessary.

Furthermore, this drawback means that the range of different grades of polymer which are generally used in rotomoulding is more restricted than would otherwise be necessary. This is because polymer products do not have a single molecular weight, but rather have a distribution of molecular weights (termed the molecular weight distribution - MWD) that may be broad or narrow. For the polymer to flow readily within a rotomould, it is important that all, or substantially all, of the polymer used has a suitably low viscosity. If a polymer product is used which has a broader molecular weight distribution then, even if the mean molecular weight of the product is low, it will contain some much higher molecular weight polymer which will in turn have a high viscosity at low shear rates. It follows from this that it is beneficial to use polymer product having a narrower molecular weight distribution than is determined from the specification of the finished product alone.

Such restrictions on the choice of polymer are a particular disadvantage since it is difficult to adapt to changes in the source or quality of polymer.

Another restriction on the choice of polymers for rotomolding results from the problems arising from "frozen in" orientations leading to warpage of the finished product. Materials having high viscosity will need a longer time to allow stresses resulting from the flow in the mold to relax out. During the cooling of the mold such stresses may be frozen in as orientations in the crystalline material. Such stresses may result in warpage of the final article.

Viewed from a first aspect, the invention provides a method of moulding an article from a polymer by means of a rotomoulding process wherein low-frequency vibrations are applied to the polymer during the moulding process in order to control the shear viscosity of the polymer.

Thus, in addition to the primarily gravitational force that applies in the conventional process, the polymer is vibrated to apply shear stress to the polymer. This has the result that a controlled degree of shear thinning occurs. In this way, the viscosity of the polymer is reduced to a level that enables it to be readily distributed about the inside of the mould. Since this is achieved without increasing the temperature of the polymer, it follows that the cycle time of the complete moulding operation may be significantly reduced.

Some further advantages of the invention have also been identified. As mentioned above, stresses on the rotomoulded article during cooling may be affected by the flow pattern of the polymer during rotomoulding. However, application of low frequency vibrations according to the invention improves the flow of the polymer and hence reduces such stresses. Thus, properties such as warpage in the rotomoulded article will be reduced, and other mechanical properties such as stress-cracking and impact resistance will be improved. Sintering and melt-together of the polymer is also improved and hence the appearance and surface properties of the finished article are of higher quality.

Furthermore, higher molecular weight polymers may be used meaning that higher specification and generally stronger product may be manufactured by this technique. Additionally, or alternatively, lower cost polymer having a broader molecular weight distribution may be employed.

The invention may be used in the context of rotomoulding apparatus which is otherwise conventional. Thus, rotary mechanism(s) may be provided such that the mould may be rotated about 1, 2 or more axes.

The speed of rotation about each axis may be the same or different and is typically in the range of about 1 to 20 rpm.

Although a wide range of low frequency vibrations will have some effect on the viscosity of the polymer within the mould, it is particularly preferred that vibrations below 1000 Hz be employed. This is for three main reasons.

Firstly, vibrations of this order provide such a level of shear stress within the polymer that shear viscosity reduces by around 50 per cent or more. This degree of shear thinning is useful and appropriate in a wide range of circumstances.

Secondly, the relationship between shear stress and viscosity is highly non-linear. As a result, at very high vibration frequencies, varying the frequency has a negligible effect on the viscosity of the polymer. On the other hand, at low frequencies a comparatively small change of frequency results in a large reduction in viscosity. This means that it is easier to control viscosity by varying vibration frequency because it is much more practicable to produce a vibration source that operates reliably over a comparatively small frequency range.

Thirdly, due to the viscoelastic properties of polymers, the flow properties are adversely affected at increased rates of deformation as the polymers tend to behave more and more like elastic solids. This means that they tend to store an increasing part of the deformation energy as elastic stresses. The elastic behaviour tends to become increasingly dominant as the rate of deformation increase at higher frequencies, which are therefore best avoided to avoid the unwanted increase in elasticity.

In most circumstances it is believed that frequencies below 100 Hertz are most effective and in many cases a lower frequency range still, for example less than 50 Hertz, is more desirable. Indeed, it is presently believed that a frequency range of between 1 and 30 Hertz is to be most preferred. The lower limit of the frequency range is less critical and any vibrational frequency which causes shear-thinning of the polymer (i.e. a reduction in its viscosity) is advantageous.

The vibration frequency may be kept constant during the moulding process, or it may be selectively turned on and off and/or varied during the process. For example, the vibrations may be turned off in order rapidly to increase the viscosity of the product towards the end of the moulding process.

The vibrations can be transmitted to the polymer in a number of different ways. For example, the mould can be subjected to vibrations. This could be done by mechanically applying vibrations directly to it. For example, via the rotary drive mechanism. This can be done by hydraulic actuators, eccentric drives, etc.

Alternatively, vibrations could be transmitted through the air as sound wave. This may be achieved by providing transducers in the walls of a chamber in which the mould is located which are designed to cause vibrations in the air of the desired frequency. In a simple form, the transducers could take the form of audio loudspeakers. These may readily be driven by a suitable signal generator. This system has the advantage that the vibration frequency may very easily be varied and, in addition, there is no need to complicate the mechanical components driving the mould.

A further alternative involves directing sound waves directly into the cavity inside the mould. This may be achieved by providing a conduit such as a flexible pipe that leads from a vibration source and through the wall of the mould. The vibration source may be located outside the heated chamber and may comprise a closed cavity with a loudspeaker inside it.

The same vibrations (i.e. same frequency and amplitude) may be applied to the polymer throughout the mould. However, in certain situations it is preferred selectively to apply vibrations to certain, localized, parts of the mould. These selectively applied vibrations may be in addition to, or instead of, vibrations applied to the whole mould.

This approach may be particularly useful when there are portions of the mould that are more complex in form than others such that difficulties may arise in obtaining good coverage of polymer. Alternatively it may be useful where it is desired to obtain a thinner wall in a certain region. Thus, by selectively applying vibrations to certain parts of the mould it is possible to produce rotomoulded products having selectively varied wall thickness.

Such localised vibrations may be applied by attaching a mechanical vibrating apparatus to the appropriate part of the mould. However, it is particularly preferred that a transducer such as a loudspeaker be located on, or close to, the outside of the mould wall where the localized vibrations are required. It is, of course, a comparatively straightforward matter to vary the frequency and/or amplitude of vibrations produced by a loudspeaker.

It will be appreciated from the a foregoing that in order to perform the method of the invention it is necessary to add means for applying low frequency vibrations to a rotomoulding apparatus. The present invention extends to such a modified apparatus and therefore, viewed from a further aspect, the invention provides a rotomoulding apparatus comprising a mould for receiving polymer, a heater for heating the mould, a rotary mechanism for rotating the mould such that the polymer may be distributed evenly about the inside of the mould, and a vibration source for applying low-frequency vibrations to the mould.

Preferably, the vibration source is arranged to supply vibrations to the mould within the preferred frequency ranges set forth above. Thus, most preferably the vibration source in use provides vibrations between 1 and 10 Hz.

Although a useful apparatus may be provided with any single frequency of vibration, it is preferred that the apparatus be further provided with a controller such that the vibration frequency may be varied as desired, most preferably within the previously defined ranges.

As previously discussed, the vibrations may be provided by mechanical means acting, for example, on the rotary drive mechanism. However, it is preferred that the vibrations be generated by sound waves. For example a chamber may be provided within which the mould is located and transducers be provided to generate sound waves of the desired frequency within that chamber. It is particularly convenient if the chamber also acts as an oven, in other words incorporating the heater. Alternatively, a remote source of sound waves may be connect via a conduit to the inside of the mould.

As previously mentioned, it is in some circumstances desirable to apply localised vibrations to the mould and this may most conveniently be achieved by providing one or more transducers such as loudspeakers which may be attached to the outside of the mould where desired. It may be desirable for these to be provided with rechargeable batteries and a mechanism for remotely controlling them, for example by radio or infra-red link to avoid the difficulties of connecting wires via the rotary drive to the mould.

The invention also extends to an article made by the rotomoulding method herein described.

Certain embodiments of the invention will now be described, by a way of example only, with reference to the accompanying drawings:
Figure 1 is a schematic drawing showing rotomoulding apparatuses according to four different embodiments of the invention; and
Figure 2 is a schematic drawing showing a cross section through part of the mould to which a local transducer is attached.

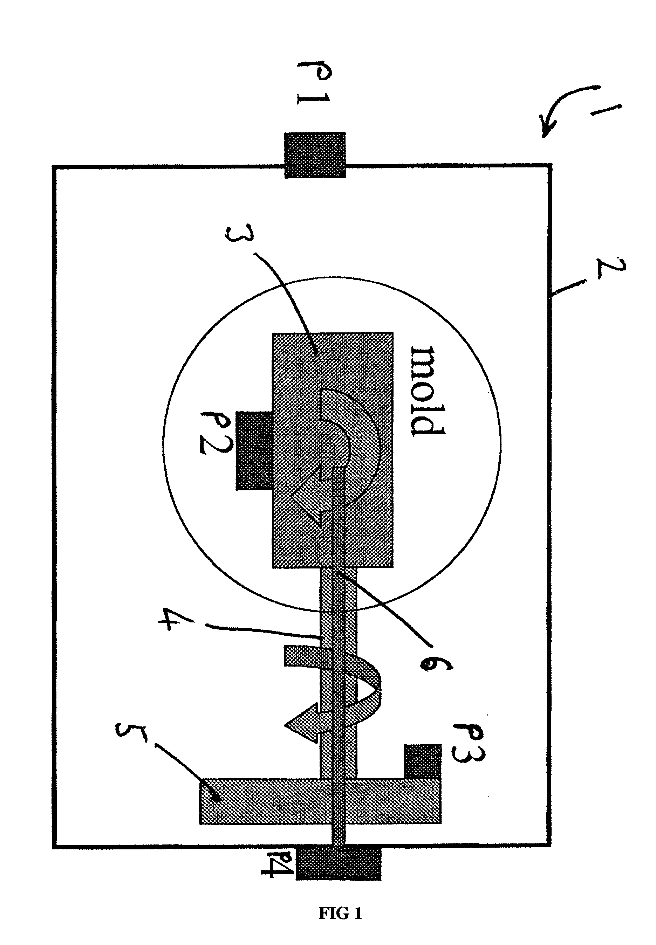

As may be seen from Figure 1, the rotomoulding apparatus is generally indicated by reference 1.

Around the outside of the apparatus, a chamber 2 is provided. This encloses virtually all of remaining components. It also includes a heater (not shown) such that the chamber 2 acts as an oven.

Inside the chamber 2, mould 3 is provided. This is connected via a rotary drive mechanism 4 to motor 5. The arrangement is such that the mould may be rotated simultaneously around two axes, as shown by the arrows in the figure. So far described, the apparatus is entirely conventional and so these structural features are not discussed in further detail.

The apparatus differs from known rotomoulding systems in that it is provided with means for applying low frequency vibrations of between 1 and 10 Hertz to the mould. Figure 1 in fact illustrates four embodiments of the invention in which means for applying vibrations to the mould are provided in four alternative positions labeled P1 to P4.

In the first embodiment of the invention, the vibrations are applied by means of a source located at a position P1 on the outside wall of the chamber 2. This may be in the form of a mechanism (e.g. an unbalanced rotor) that vibrates the outside wall of the oven itself. Alternatively, an electrical transducer such as a microphone may be provided in an opening in the wall. In either case, air within the oven is set to vibrate and this in turn causes the mould and the polymer to vibrate.

In the second embodiment of the invention the vibration source is attached to the mould itself at a position P2. Similar mechanisms can be used as those described above in relation to position P1. However, it will be appreciated that if a loudspeaker is used it must be attached on to the outside wall of the mould rather than in an opening in order to isolate it from the molten polymer.

In third embodiment of the invention, a mechanical actuator (e.g. hydraulic or electro-mechanical) is attached to the drive shaft 4 of the motor 5. It will be appreciated that by vibrating the drive shaft the mould 3 is in turn vibrated.

In the fourth embodiment a conduit 6 is provided which leads from the inside of the mould 3 to the outside of the chamber 2. Here it is connected to vibration source P4. This is a small closed chamber containing a transducer that causes air or gas to be vibrated within the chamber. The air in the chamber is coupled to the mould 5 via conduit 6 so that the air within the mould 5 is caused to vibrate. This in turn caused the polymer to vibrate.

In operation, polymer powder is poured into mould 3 through an opening that is then closed so that the mould provides a completely closed volume. The mould 3 is then driven by motor 5 such that it rotates about both axes as illustrated in Figure 1. The speed of rotation of the mould about the main axis is about 9 rpm and the speed of rotation about the secondary axis is about 1.4 rpm. As the mould starts to rotate, the heater (not shown) is switched on so that the temperature within chamber 2 starts to increase. The vibration source (P1, P2, P3 or P4 as appropriate) is then switched on and set to the desired operation frequency such that the polymer within the mould 3 is caused to vibrate. As the mould 3 rotates, the powder is distributed around the inside surface of the mould 3 and begins to melt and stick to this surface due to the increase in temperature.

The vibrations cause the melted polymer to shear thin, i.e. to reduce in viscosity. This enables it to flow readily throughout the mould 3 as the mould is rotated.

After a suitable period of time, the polymer will have formed an even coating over the entire inner surface of the mould 3. The source of vibration may then be switched off, as can the heat source so that the mould will cool down. The polymer increases in viscosity and eventually sets. The motor 5 is also a turned-off, and when the polymer has reached a suitably low temperature, the mould may be separated to enable the product to be removed.

In some circumstances it is desirable to apply localised vibrations to a certain part or parts of the mould. This may be done either to reduce the local wall thickness of the moulded product, or to facilitate flow of polymer into a particularly complex part of the mould.

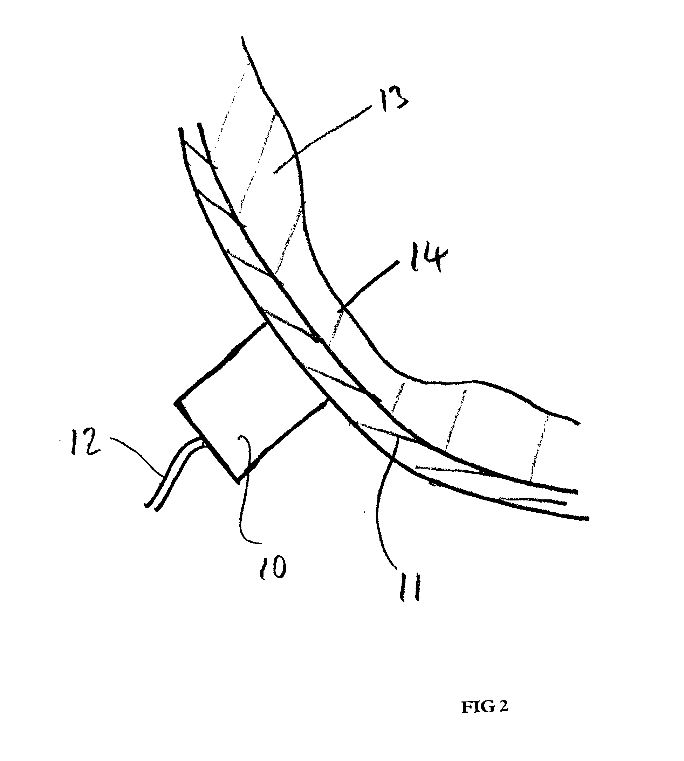

An example of the former is illustrated in Figure 2. Here, vibration source 10 is connected to a portion of mould wall 11. A cable 12 provides power and control of the vibration source 10. Because of the rotary motion of the mould, it is necessary for cable 12 to be provided with suitable rotary connectors.
(Alternatively, battery-power and radio or infra-red control may be used).

During the moulding process, the vibration source 10 may be selectively activated to produce localised additional shear thinning in the adjacent region 14 of the polymer 13 inside the mould. This localised reduction in viscosity results in a thinner wall compared to the remainder of the product.

## Claims

1. A method of moulding an article from a polymer by means of a rotomoulding process wherein low-frequency vibrations are applied to the polymer during the moulding process in order to control the shear viscosity of the polymer.

2. A method as claimed in claim 1, wherein vibrations below 1000 Hz are employed.

3. A method as claimed in claim 2, wherein vibrations below 100 Hertz are employed.

4. A method as claimed in claim 1, 2 or 3, wherein a frequency of between 1 and 30 Hertz is employed.

5. A method as claimed in any preceding claim wherein a frequency of between 1 and 10 Hertz is employed.

6. A method as claimed in any preceding claim wherein a drive mechanism is provided to rotate the mould and the vibrations are applied to the mould via the rotary drive mechanism.

7. A method as claimed in any preceding claim wherein vibrations are transmitted to the mould as sound waves.

8. A method as claimed in claim 7, wherein the mould is provided within a chamber, the method further comprising providing transducers in the walls of the chamber that create sound waves of the desired frequency.

9. A method as claimed in any preceding claim, further comprising selectively applying vibrations to certain parts of the mould.

10. A method as claimed in claim 8, wherein a product having a selectively varied wall thickness is thereby provided.

11. A rotomoulding apparatus comprising a mould for receiving polymer, a heater for heating the mould, a rotary drive mechanism for rotating the mould such that the polymer may be distributed evenly about the inside of the mould, and a vibration source for applying low-frequency vibrations to the mould.

12. The apparatus of claim 11, further comprising a controller arranged such that the vibration frequency may be varied as desired.

13. The apparatus of claim 11 or 12, wherein the vibrations are provided by a mechanical actuator acting on the rotary drive mechanism.

14. The apparatus of claim 11 or 12, wherein the mould is provided within a chamber and transducers are provided to generate sound waves of the desired frequency within the chamber.

15. The apparatus of claim 14, wherein the chamber also acts as an oven for heating the mould.

16. The apparatus of any of claim 11 or 12, wherein a remote source of sound waves is connected via a conduit to the inside of the mould.

17. The apparatus of any of any of claims 11 to 16, further comprising means to apply localised vibrations to the mould

18. The apparatus of claim 17, wherein the localised vibrations are provided by one or more transducers located on the outside of the mould.
